# EUROPEAN PATENT APPLICATION

(11) **EP 0 551 870 A2**
(43) Date of publication of application: **21.07.1993**
(21) Application number: 93100345.3
(22) Date of filing: 12.01.1993
(51) Int. Cl.: G06F 15/78, G06F 11/20, G06F 12/06

(54) **Electronic apparatus**

(30) Priority: 13.01.1992 JP 4092/92
(71) Applicant: SONY CORPORATION, Tokyo 141 (JP)
(72) Inventor: Shimada, Keiichiro, c/o Sony Corporation, Tokyo (JP); Furui, Sunao, c/o Sony Corporation, Tokyo (JP)
(74) Representative: Körber, Wolfhart, Dr.rer.nat.

(57) **Abstract**

A unitary electronic device (10) includes a CPU (1), a RAM (3), a ROM (2) for storing a processing porgram for the CPU (1) which program includes a command to execute, at each processing cycle of the CPU (1), the processing located at a predetermined address in the RAM (3), and an input means (4) or the like, for entering in the RAM (3) at the predetermined address, information for correcting a defect in the processing program stored in the ROM (2).

## Description

### BACKGROUND OF THE INVENTION

### Field of the Invention:

The present invention relates to an electronic apparatus such as a one-chip microcomputer incorporated in electronic devices, for example.

### Description of the Prior Art:

One-chip microcomputers incorporated in electronic devices are constructed by electronic apparatus in which a fixed memory means (ROM), a processing means (CPU), an input means, a variable memory means (RAM), etc., are unitarily integrated.

In such an electronic apparatus (one-chip microcomputer), a processing program for the processing means (CPU) is stored in the fixed memory means (ROM). That is, a particular processing is carried out in accordance with an information (processing program) stored in the fixed memory means (ROM). Therefore, if this fixed memory means (ROM) is formed by a mask ROM, then such electronic apparatus can be mass-produced inexpensively.

The above electronic apparatus are incorporated in electronic devices such as a consumer video tape recorder having a built-in camera, a small video deck or the like. Recently, electronic apparatus are designed to have multiple functions in order to discriminate products. As a result, the amount of information (processing program) stored in the fixed memory means (ROM) is increased. In particular, as the amount of the processing program is increased considerably, the occurrence of bug therein cannot be avoided.

If such bug is discovered after the electronic apparatus are mass-produced, the mass-produced apparatus must be abandoned or mass-produced one more time. Further, external parts for patching the bug must be added to the electronic apparatus. If electronic apparatus are mass-produced one more time, then a lot of additional costs become necessary. Furthermore, external parts cannot be substantially mounted on electronic devices because the electronic device has many electronic parts mounted therein with high density.

To solve the above problems, the assignee of the present application has previously proposed a means that can correct such bug after electronic devices were mass-produced (see Japanese Patent Application No. 3-118799). To be more concrete, according to this previously-proposed means, an electronic device includes therein a patch information memory means for patching a bug and an access change-over means. Then, a defective or bug portion of the information stored in the fixed memory means is identified and the access is changed over from the fixed means to the patch information memory means at that defective or bug portion.

In this previously-proposed means, however, the design of the electronic device itself (hardware) must be changed such as when there are provided the patch information memory means and the access changeover means. Therefore, this previously- proposed means cannot be applied to the existing electronic devices with ease.

### OBJECTS AND SUMMARY OF THE INVENTION

Therefore, it is an object of the present invention to provide an improved electronic device in which the aforementioned shortcomings and disadvantages encountered with the prior art can be eliminated.

It is another object of the present invention to provide an electronic device in which a bug in an information stored in a fixed memory can be patched by an information from a variable memory so that a bug that was discovered after the mass- production can be corrected without changing the design of existing electronic devices.

It is still another object of the present invention to provide an electronic device which can achieve remarkable effects from a manufacturing standpoint.

According to an aspect of the present invention, there is provided an electronic device which comprises a fixed memory in which an information is stored in a fixed state, a processing unit for effecting a processing in accordance with the information stored in the fixed memory, an input device for being input with an information from the outside, and a variable memory in which an information input by the input device is stored, the fixed memory, the processing unit, the input device and the variable memory being unitarily integrated, wherein the information stored in the fixed memory includes a command for executing a processing in accordance with a predetermined address information of the variable memory, and a patch information for patching a bug of the information stored in the fixed memory is written in the predetermined address of the variable memory.

The above and other objects, features, and advantages of the present invention will become apparent from the following detailed description of an illustrative embodiment thereof to be read in conjunction with the accompanying drawings, in which like reference numerals are used to identify the same or similar parts in the several views.

### BRIEF DESCRIPTION OF THE DRAWINGS

FIG. 1 is a block diagram showing a circuit arrangement of an electronic device according to an embodiment of the present invention;
FIG. 2 is a diagram used to explain the electronic device according to the present invention;
FIG. 3 is a diagram used to explain the electronic device according to the present invention; and
FIG. 4 is a flowchart to which references will be made in explaining operation of the electronic device according to the present invention.

### DETAILED DESCRIPTION OF THE PREFERRED EMBODIMENT

The present invention will hereinafter be described with reference to the drawings.

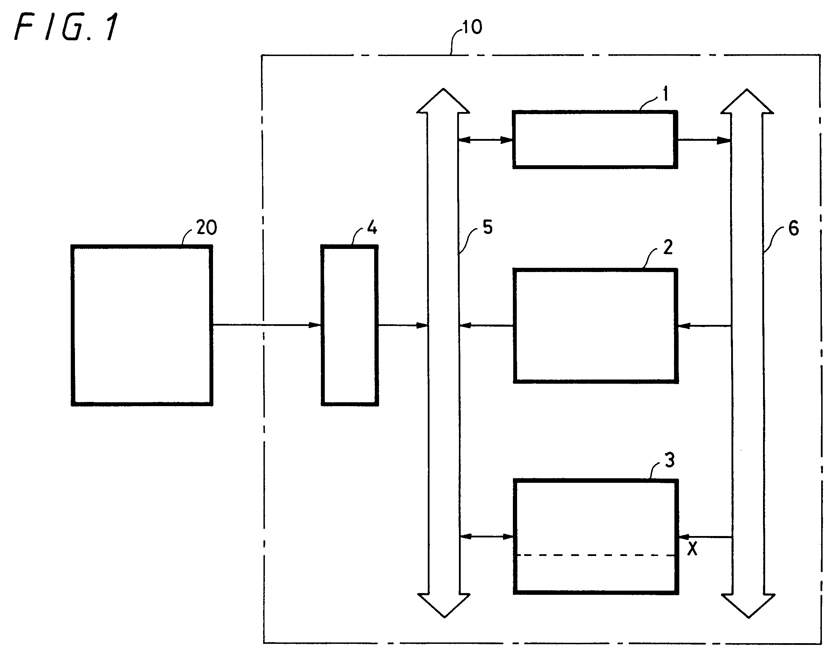

In FIG. 1 of the accompanying drawings, reference numeral 10 generally designates an overall arrangement of a one-chip microcomputer serving as an electronic device. The electronic device 10 includes a CPU (central processing unit) 1 serving as a processing means, a ROM (read only memory) 2 serving as a fixed memory means, a RAM (random access memory) 3 serving as a variable memory means, an input means 4 or the like. The CPU 1, the ROM 2, the RAM 3 and the input means 4 are connected to one another via a data bus 5. An address output formed by the CPU 1 is supplied through an address bus 6 to address inputs of the ROM 2 and the RAM 3.

An external storage device 20 is connected to the input means 4. This external storage device 20 also is disposed within the electronic device 10. The external storage device 20 is formed of, for example, an EEPROM (electrically erasable and programmable ROM) in which there are generally stored parameters, etc., obtained in the adjustment process of the electronic device. An information from the external storage device 20 is supplied through the input means 4 to the RAM 3, in which it is stored so as to be utilized in the processing in the CPU 1.

In such electronic device 10, an information of a processing program at the CPU 1 is stored in the ROM 2 in a fixed state. In this processing program, there is provided a command which executes a processing in accordance with an information stored in a predetermined address X of the RAM 3 at every predetermined cycle. In the external storage device 20, there are stored an information (described later on) for patching a bug of the information stored in the ROM 2, if necessary, together with the above parameters obtained in the adjustment process.

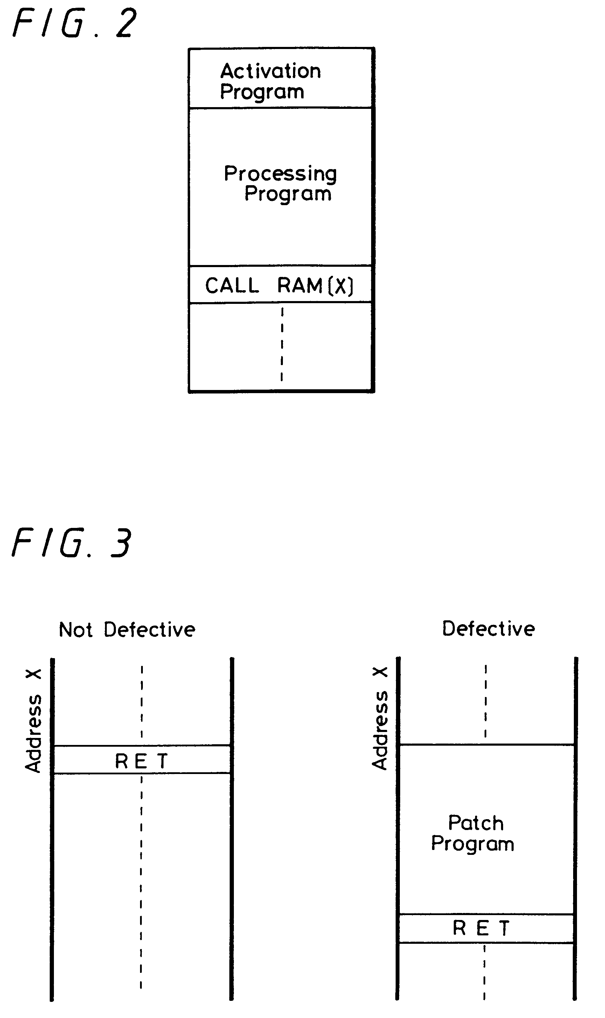

As shown in FIG. 2 of the accompanying drawings, in the ROM 2, there is initially provided an activation program. Then, there is provide a processing program for the CPU 1. This processing program includes a command for calling (CALL) the predetermined address X of the RAM 3, for example, at every predetermined cycle.

In the predetermined address X of the RAM 3, there is stored an information for patching a bug of the information stored in the ROM 2 from the external storage device 20 through the input means 4. More specifically, in FIG. 3 of the accompanying drawings, when the information stored in the ROM 2 has no bug, a return (RET) command is provided in the predetermined address X. On the other hand, when the information stored in the ROM 2 has a bug, there is provided a program for patching the bug of the information from the predetermined address X of the RAM 3.

The return (RET) command is provided at the end of the patch program.

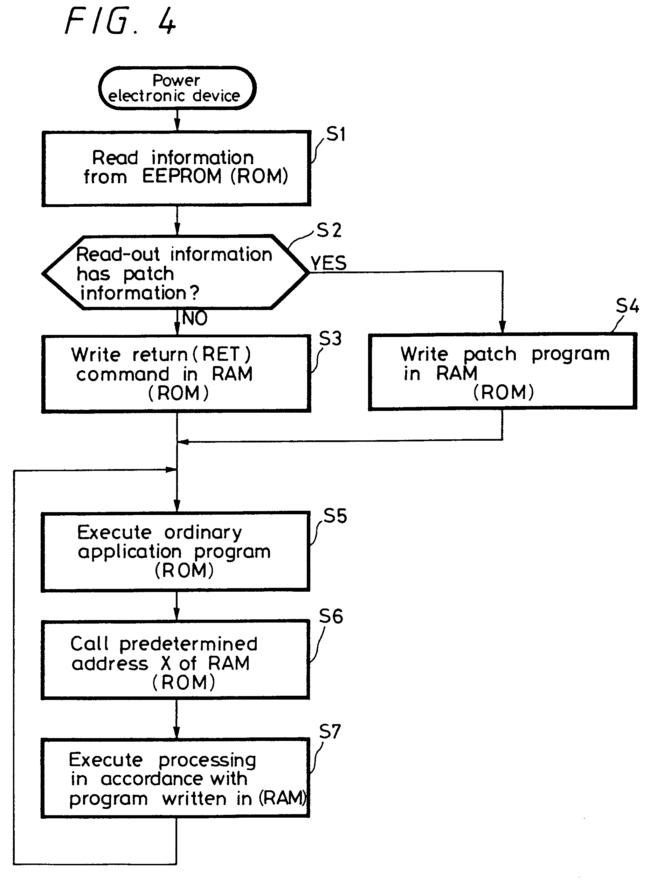

Therefore, an operation shown in a flowchart of FIG. 4, for example, is carried out in the electronic device 10.

Referring to FIG. 4, when the power switches of the electronic device or electronic apparatus 10 are turned on, at step S1, an information from the external storage device 20 is stored in the RAM 3. It is determined in the next decision step S2 whether or not the read information includes the program for patching the bug on the information stored in the ROM 2. If a NO is output at decision step S2, then the processing proceeds to step S3, whereat a return (RET) command is written in the predetermined address X of the RAM 3.

If the read-out information has the patch program for patching the bug as represented by a YES at decision step S2, then the processing proceeds to step S4, whereat the bug patch program from the external storage device 20 is written in the predetermined address X of the RAM 3. The end of this patch program includes a return (RET) command.

In the next step S5, the processing is executed in accordance with the information program stored in the ROM 2 by the CPU 1. In step S6, the predetermined address X of the RAM 3 is called (CALL). Thus, in step S7, the processing is executed in accordance with the bug patch program from the predetermined address X of the RAM 3 by the CPU 1. After step S7 was ended, the processing is returned to step S5.

As described above, according to the electronic device of the present invention, although the defect of the information stored in the fixed memory means (ROM 2) is once executed, the bug is patched by the information from the variable memory means (RAM 3) and the bug on the program can be compensated for totally. Therefore, the design of the existing electronic device 10 (CPU 1, ROM 2, RAM 3, input means 4, etc.) itself need not be varied and the bug that was discovered after the electronic devices had been mass-produced can be patched.

In the above-mentioned flowchart, steps S1 through S6 are all executed in accordance with the program stored in the ROM 2. Further, in the above-mentioned program, the call (CALL) command and the return (RET) command can be executed by using jump (JMP and JUMP return) commands.

As the bug in the information stored in the ROM 2 and which can be patched in the above-mentioned apparatus, there can be expected erroneous display on the display unit or the like. That is, in the erroneous display caused by the bug on the program, such erroneous display is erased by the patch program after the erroneous display was made. Alternatively, if a correct display is made, then an instantaneous erroneous display can be immediately patched although the erroneous display occurs. Therefore, the users cannot know such erroneous display.

It is expected that bugs on the information stored in the ROM 2 and which can be patched by the above-mentioned apparatus constitute about 30 to 40% of all bugs. Accordingly, if the bugs cannot be patched by the above-mentioned apparatus, electronic devices, etc., must be mass-produced one more time. However, patching of the bugs with the above ratio can achieve remarkably large effects from a manufacturing standpoint.

According to the present invention, the bug on the information stored in the fixed memory means is patched by the information from the variable memory means. Therefore, the bug that was discovered after the electronic device had been mass- produced can patched without changing the design of the existing electronic device.

Having described a preferred embodiment of the invention with reference to the accompanying drawings, it is to be understood that the invention is not limited to that precise embodiment and that various changes and modifications thereof could be effected by one skilled in the art without departing from the spirit or scope of the invention as defined in the appended claims.

## Claims

1. An electronic device comprising:
(a) a fixed memory means (2) in which an information is stored in a fixed state;
(b) processing means (1) for effecting a processing in accordance with the information stored in the fixed memory means (2);
(c) input means (4) for receiving information input from an outside source (20); and
(d) variable memory means (3) in which an information input to the input means (4) is stored,
the fixed memory means (2), the processing means (1), the input means (4) and the variable memory means (3) being unitarily integrated,
wherein the information stored in the fixed memory means (2) includes a command for executing a processing in accordance with information in a predetermined address in the variable memory means (3), and a patch information for patching a bug of the information stored in the fixed memory means (2) is written in the predetermined address of the variable memory means(3).

2. The electronic device according to claim 1, wherein the electronic device is a one-chip microcomputer.

3. The electronic device according to claim 1 or 2, wherein the command is provided at each one of predetermined processing cycles of the processing means.

4. The electronic device according to anyone of claims 1 to 3, further comprising detecting means for detecting whether or not the information input by the input means (4) includes the patch information.

5. The electronic device according to claim 4, wherein the patch information is written in the fixed memory means (2) when it is detected by the detecting means that the input information includes the patch information.

6. The electronic device according to claim 4 or 5, wherein a return command for returning a processing to the fixed memory means (2) is written in the predetermined address of the variable memory means (3) when it is detected by the detecting means that the input information does not include the patch information.

7. The electronic device according to claim 5, wherein the patch information include a command for returning a processing of the processing means (1) to the fixed memory means (2).
